(19) Europäisches Patentamt
European Patent Office
Office européen des brevets

(11) EP 2 182 720 B1

(12) EUROPÄISCHE PATENTSCHRIFT

(45) Veröffentlichungstag und Bekanntmachung des Hinweises auf die Patenterteilung:
29.04.2015 Patentblatt 2015/18

(51) Int Cl.:
H04N 5/232 (2006.01)          H04N 3/14 (2006.01)
H04N 5/225 (2006.01)          H04N 5/335 (2011.01)

(21) Anmeldenummer: 09450205.1

(22) Anmeldetag: 28.10.2009

(54) **Verfahren und Vorrichtung zur Aufnahme von Bildern**

Method and device for taking pictures

Procédé et dispositif de capture d'images

(84) Benannte Vertragsstaaten:
AT BE BG CH CY CZ DE DK EE ES FI FR GB GR HR HU IE IS IT LI LT LU LV MC MK MT NL NO PL PT RO SE SI SK SM TR

(30) Priorität: 28.10.2008 AT 16822008

(43) Veröffentlichungstag der Anmeldung:
05.05.2010 Patentblatt 2010/18

(73) Patentinhaber: AIT Austrian Institute of Technology GmbH
1220 Wien (AT)

(72) Erfinder:
• Belbachir, Ahmed Nabil
1200 Wien (AT)
• Pflugfelder, Roman
1100 Wien (AT)

(74) Vertreter: Wildhack, Andreas
Wildhack & Jellinek
Patentanwälte OG
Landstrasser Hauptstraße 50
1030 Wien (AT)

(56) Entgegenhaltungen:
WO-A1-2006/125233          WO-A1-2008/061268
US-A1- 2005 099 504          US-A1- 2008 117 294
US-B1- 6 757 008

• LICHTSTEINER P ET AL: "Improved on/off temporally differentiating address-event imager", ELECTRONICS, CIRCUITS AND SYSTEMS, 2004. ICECS 2004. PROCEEDINGS OF TH E 2004 11TH IEEE INTERNATIONAL CONFERENCE ON TEL AVIV, ISRAEL DEC. 13-15, 2004, PISCATAWAY, NJ, USA,IEEE, 13. Dezember 2004 (2004-12-13), Seiten 211-214, XP010774236, DOI: 10.1109/ICECS.2004.1399652 ISBN: 978-0-7803-8715-7

• LICHTSTEINER P ET AL: "A 128 X 128 120db 30mw asynchronous vision sensor that responds to relative intensity change", DIGEST OF TECHNICAL PAPERS / 2006 IEEE INTERNATIONAL SOLID-STATE CIRCUITS CONFERENCE : SAN FRANCISCO, CA, 5 - 9 FEBRUARY 2006, IEEE SERVICE CENTER, PISCATAWAY, NJ , US, 6. Februar 2006 (2006-02-06), Seiten 2060-2069, XP031741801, ISBN: 978-1-4244-0079-9

**Beschreibung**

Die Erfindung betrifft ein Verfahren zur Aufnahme von Bildern gemäß dem Oberbegriff des Anspruchs 1 sowie eine Anordnung zur Aufnahme von Bildern gemäß dem Oberbegriff des Anspruchs 9.

Erfindungsgemäße Verfahren und Vorrichtungen werden insbesondere im Bereich der automatisierten Überwachung, insbesondere von öffentlichen Plätzen, eingesetzt.

Als weitwinkelig wird eine Aufnahme mit einem horizontalen Aufnahmewinkel von über 60°, insbesondere über 180°, abhängig vom jeweiligen Bildformat, verstanden. Die Erfindung bietet auch bei Panorama-Aufnahmen mit einem horizontalen Aufnahmewinkel von 360° sehr gute Ergebnisse.

Der Einsatz rotierender Flächen- oder Zeilenkameras zur Aufnahme von weitwinkeligen, insbesondere 360° Panoramabildern in Echtzeit, also etwa mit 25 - 30 Bildern pro Sekunde, ist aufgrund des hohen Datenvolumens und wegen der beschränkten Übertragungskapazität bzw. Verarbeitungsfähigkeit gängiger Rechnersysteme derzeit nicht vertretbar.

Eine andere, weit verbreitete Technologie zur Aufnahme von Panoramabildern stellen katadioptrische Kameras dar. Diese Kameras arbeiten mit einem ihnen vorgelagerten, parabolischen Spiegel, welcher einen Großteil der Szene auf die Kamera abbildet. Um zu dem endgültigen Bild zu gelangen, ist es erforderlich, die parabolische Verzerrung, welche durch den der Kamera vorgeschalteten Spiegel hervorgerufen wird, aus dem Panoramabild durch Entzerrung zu entfernen, wodurch ein perspektivisches Panoramabild entsteht. Dieser Schritt ist im Allgemeinen rechenintensiv und muss für jedes der aufgenommenen Panoramabilder durchgeführt werden.

Verfahren zur Erstellung von Panoramabildern sind z.B. aus US-B-6757008, US-A-2005/099504 und US-A-2008/117294 bekannt.

Aufgabe der Erfindung ist es, die eingangs geschilderten Probleme zu überwinden und ein Aufnahmeverfahren sowie eine Aufnahmeanordnung zu schaffen, bei welcher die eingangs genannten Probleme vermieden werden.

Die Erfindung löst die Aufgabe mit den Merkmalen des Kennzeichens des Anspruchs 1 sowie des Anspruchs 9.

Als Lösung werden transiente oder neuromorphe optische Sensoren, wie in der AT502032 entsprechend WO-A-2006/125233 sowie WO-A-2008/061268 beschrieben, herangezogen, die bedingt durch ihren Aufbau geringere Datenraten aufweisen als herkömmliche Kameras, welche zu vorgegebenen Zeitintervallen Bilder, insbesondere mit einer konstanten Datenrate, erstellen. Für die Erstellung eines perspektivischen 360° Panoramabildes in Echtzeit mit 25 - 30 Panoramabildern pro Sekunde ist bei rotierenden Flächen- oder Zeilensensoren ein Vielfaches an Einzelbildaufnahmen erforderlich. Neuromorphe Helligkeitssensoren weisen hingegen durch ihr charakteristisches Aufnahme- und Datenübertragungsverhalten sehr geringe Datenraten auf, sodass sehr hohe Umdrehungszahlen von mit derartigen Sensoren gebildeten, rotierten Flächensensoren oder Zeilensensoren zur Aufnahme von perspektivischen 360° Panoramabilder von bis zu 1500 Umdrehungen pro Minute möglich sind.

Die Erfindung erlaubt die Aufnahme eines preiswerten, hochauflösenden und unverzerrten 360° Panoramabildes in Echtzeit. Ferner lassen sich durch die geringen Datenraten der vom Sensor abgegebenen Daten eines erfindungsgemäß eingesetzten schnell rotierenden, neuromorphen Helligkeitssensors Panoramabilder in Echtzeit rekonstruieren.

Bei herkömmlichen, katadioptrischen Sensoren besteht häufig das Problem, dass aufgrund der großen Verzerrung die Auflösung an den Rändern des Panoramabildes sehr gering ist. Im Gegensatz zu katadioptrischen Sensoren besteht bei der gegenständlichen Erfindung der Vorteil, dass neben der geringen Anzahl auszuwertender Daten keinerlei rechenintensive Entzerrung des Bildes durchgeführt werden muss. Es ergibt sich somit eine Vielzahl neuer Anwendungen in den Bereichen Überwachung und Robotik, aber auch im Automotivbereich, wie in Luft- und Raumfahrt.

Erfindungsgemäß ist bei einem Verfahren zur Aufnahme von Bildern, insbesondere weitwinkeligen Bildern oder 360° Panoramabildern, mit einem Helligkeitssensor mit einer Vielzahl von in Form von zumindest einer Spalte angeordneten Helligkeitssensor-Pixel, wobei jedes der Helligkeitssensor-Pixel bei von ihm festgestellter Überschreitung oder Unterschreitung eines vorgegebenen oberen oder unteren Helligkeitsschwellenwerts in dem von ihm detektierten Licht eine Nachricht in Form eines Signals abgibt, vorgesehen, dass der Aufnahmebereich des Helligkeitssensors gegenüber der aufzunehmenden Szene rotiert oder periodisch verschwenkt wird, wobei das Licht von jeweils denselben abzubildenden Bereichen der Szene in zeitlich periodischen Abständen auf jeweils die selben Helligkeitssensor-Pixel trifft bzw. abgebildet wird, dass aus den Nachrichten Bildpunkte ermittelt werden, indem die Zeilennummer des die jeweilige Nachricht erstellenden Helligkeitssensor-Pixels und der Zeitpunkt der Verarbeitung oder des Generierens der jeweiligen Nachricht oder ein von diesem Zeitpunkt abgeleiteter Parameter als Koordinaten des der Nachricht zugeordneten Bildpunktes herangezogen werden, und dass ein Gesamtbild der Szene basierend auf den einlangenden Nachrichten sowie den diesen Nachrichten zugeordneten Bildpunkten erstellt wird, indem diese Bildpunkte gegenüber dem Hintergrund des Gesamtbildes, insbesondere sich farblich abhebend, sich unterscheidend dargestellt werden.

Eine besondere Weiterbildung der Erfindung sieht vor, dass zumindest zwei Spalten von Helligkeitssensor-Pixeln auf dem Träger in Form eines Pixel-Arrays angeordnet werden, dass gleiche Szenenbereiche im Zuge des periodischen Verschwenkens oder des Rotierens des Aufnahmebereichs des Helligkeitssensors auf diejenigen Helligkeitssensor-Pixel abgebildet werden, welche in derselben Zeile und in benachbarten Spalten angeordnet sind, dass der zeitliche Abstand zwischen dem Generieren oder Verarbeiten von Nachrichten, welche von zwei in derselben Zeile und in benachbarten Spalten angeordneten Helligkeitssensor-Pixeln abgegeben werden, ermittelt wird, dass gegebenenfalls die Reihenfolge der Erzeugung oder der Verarbeitung der Nachrichten mit der Reihenfolge der Anordnung der die jeweiligen Nachrichten abgebenden Helligkeitssensor-Pixel in Bezug auf die Bewegungsrichtung des Gegenstandsbereichs des Helligkeitssensors gegenüber der Szene übereinstimmt, dass aus dem zeitlichen Abstand und dem räumlichen Abstand der Helligkeitssensor-Pixel einer Zeile eine momentane Geschwindigkeit bzw. Drehgeschwindigkeit, der Helligkeitssensor-Pixel relativ zur Szene und gegebenenfalls eine darauf basierende Winkelgeschwindigkeit, abgeleitet wird, dass jedem Zeitpunkt bezüglich eines vorgegebenen Zeit-Nullpunkts durch eine Funktion eine, insbesondere monoton ansteigende, zurückgelegte Bogenlänge durch Akkumulation oder Integration der Geschwindigkeit über die Zeit zugeordnet wird, wobei insbesondere die Geschwindigkeit für jede auftretende Aufeinanderfolge von zeitlich beabstandeten, hintereinander einlangenden Nachrichten neu ermittelt wird, insbesondere nach dem Zusammenhang

$$l = \int_0^t v(t')dt'.$$

Hierdurch kann eine Kalibrierung der Relativgeschwindigkeit des Sensors bzw. des Spiegels unterbleiben, da ein Zusammenhang zwischen Zeit und Bogenlänge direkt aus den aufgezeichneten Daten abgeleitet werden kann.

Eine weitere besondere Fortbildung der Erfindung sieht vor, dass einer der zeitlich beabstandeten, hintereinander einlangenden Nachrichten, insbesondere der letzten dieser Nachrichten, diejenige Bogenlänge zugeordnet wird, welche dem Zeitpunkt des Einlangens dieser Nachricht zugeordnet worden ist, und dass ausschließlich Nachrichten, denen bereits eine Bogenlänge zugeordnet worden ist, als Bildpunkte in das Bild eingetragen werden, wobei die Bogenlänge als genannter parameter und die Zeilennummer der jeweiligen Nachricht als Bildkoordinaten des einzutragenden Punktes festgelegt werden. Hierdurch wird das Problem der mehrfachen Detektion von Nachrichten durch in ein und derselben Reihe liegende Helligkeitssensor-Pixel vermieden.

Eine weitere besondere Ausführungsform der Erfindung sieht vor, dass der Helligkeitssensor oder eine dem Helligkeitssensor vorgeschaltete Abbildungseinheit um eine vorgegebenen Rotationsachse oder Schwenkachse mit vorgegebener Winkelgeschwindigkeit rotiert oder verschwenkt wird. Dies ermöglicht einen besonders einfachen Aufbau der zur Verfahrensführung benötigten Einheiten und bietet eine einfache und effiziente Durchführung des Verfahrens.

Weiters kann vorgesehen sein, dass der Helligkeitssensor gegenüber der Szene lagefest festgelegt ist und die Bewegung des Aufnahmebereichs des Helligkeitssensors durch die gegenüber dem Helligkeitssensor und der Szene rotierende oder verschwenkte Abbildungseinheit festgelegt wird. Hierdurch wird bei stillstehendem Sensor bzw. stillstehender Kamera ein Spiegel rotiert und die aufzunehmende Szene durch Verschwenken des Spiegels auf dem Sensor abgebildet. Hierdurch wird das Problem der Datenübertragung von einem bewegten Sensor vermieden.

Weiters kann vorgesehen sein, dass die Rotationsachse oder Schwenkachse und die durch eine der Spalten von Helligkeitssensor-Pixeln auf dem Helligkeitssensor gebildete Achse zueinander parallel ausgerichtet werden. Hierdurch werden geometrisch bedingte Mehrfachdetektionen wirkungsvoll vermieden.

Eine weitere besondere Ausführungsform der Erfindung sieht vor, dass eine maximale Szenenänderungsrate in Form der Anzahl von Nachrichten innerhalb einer vorgegebenen Zeitspanne bei stillstehendem Aufnahmebereich des Helligkeitssensor gegenüber der Szene ermittelt oder ein Wert hierfür vorgegeben wird, und dass die Frequenz der periodischen Bewegung des Aufnahmebereichs des Helligkeitssensors so lange erhöht wird, bis die für eine unverändert bleibende Szene ermittelte Nachrichtenrate einem Vielfachen, insbesondere dem 10-fachen bis 1000-fachen, der maximalen Szenenänderungsrate entspricht. Dies dient zur einfachen Kalibrierung sowie zur Einstellung der Drehzahl der Abbildungseinheit bzw. des Helligkeitssensors.

Weiters kann vorgesehen werden, dass nach dem Zurücklegen einer vorgegebenen Bogenlänge oder nach Ablauf einer Zeitspanne bezüglich eines festgelegten Zeit-Nullpunkts die Aufnahme eines neuen Bildes gestartet wird und die Aufnahme des bisherigen Bildes beendet wird, wobei gegebenenfalls die Bogenlänge auf einen vorgegebenen Wert, insbesondere 0, zurückgesetzt wird, oder der Zeitpunkt des Beginns der Aufnahme des neuen Bildes als Zeitnullpunkt für die Zeitkoordinate dieses neuen Bildes festgesetzt wird, wobei vorzugsweise das bisherige Bild abgespeichert und/oder zur Verfügung gehalten wird. Hierdurch können einzelne Panoramabilder im Zuge der Endlosaufnahme einfach voneinander separiert werden bzw. Panoramabilder erzeugt werden, deren Bilder stets gleiche Szenenbereiche wiedergeben.

Weiters ist erfindungsgemäß eine Anordnung zur Aufnahme von, insbesondere weitwinkeligen, Bildern einer Szene, insbesondere 360° Bildern, mit einem Helligkeitssensor mit einer Vielzahl von Helligkeitssensor-Pixeln, vorgesehen, wobei jedes der Helligkeitssensor-Pixel bei von ihm festgestellter Überschreitung oder Unterschreitung eines vorgegebenen oberen oder unteren Helligkeitsschwellenwerts in dem von ihm detektierten Licht eine Nachricht in Form eines Signals abgibt, und wobei die Helligkeitssensor-Pixel in Form von zumindest einer Spalte angeordnet sind. Dabei sieht die Erfindung vor, dass die Anordnung eine Antriebseinheit umfasst, welche den Aufnahmebereich des Helligkeitssensors gegenüber der Szene rotiert oder periodisch verschwenkt, dass die Anordnung eine Bilderzeugungseinheit umfasst, welche eine Punkterzeugungseinheit und einen Bildspeicher umfasst, dass die Punkterzeugungseinheit den Helligkeitssensor-Pixeln nachgeschaltet ist, dass die Punkterzeugungseinheit eine Zeiterfassungseinheit umfasst, welche die in den Nachrichten enthaltene Generierungszeit feststellt oder der Nachricht einen durch einen externen Zeitgeber erstellten entsprechenden Zeitwert zuordnet, dass die Punkterzeugungseinheit eine Zeilenerfassungseinheit umfasst, welche die dem die Nachricht generierenden Helligkeitssensor-Pixel zugeordnete Zeilennummer detektiert und diese an den Ausgang der Zeilenerfassungseinheit anlegt, dass der am Ausgang der Zeiterfassungseinheit anliegende Zeitwert optional einer der Zeiterfassungseinheit nachgeschalteten Parameterbildungseinheit zugeführt ist, welche von dem Zeitwert mittels einer vorgegebenen Funktion einen Parameter ableitet, und dass der Ausgang der Zeilenerfassungseinheit und der Ausgang der Zeiterfassungseinheit oder der Parameterbildungseinheit an den Ausgang der Punkterzeugungseinheit angeschlossen sind und die Zeilennummer und die Zeit oder der Parameter als Koordinaten eines Bildpunktes dem Bildspeicher zugeführt sind.

Eine besondere Ausführungsform der Erfindung sieht vor, dass zumindest zwei Spalten von Helligkeitssensor-Pixeln in Form eines Pixel-Arrays angeordnet sind, dass je einer Zeile von Helligkeitssensor-Pixel eine Zeitabstandsmesseinheit nachgeschaltet ist, welche den zeitlichen Abstand des Erzeugens von Nachrichten, welche von in der jeweiligen Zeile liegenden Helligkeitssensor-Pixeln abgegeben worden sind, ermittelt, dass jeder Zeitabstandsmesseinheit jeweils eine Geschwindigkeitsbildungseinheit nachgeschaltet ist, welche aus dem zeitlichen Abstand und dem vorgegebenen räumlichen Abstand der Helligkeitssensor-Pixel der jeweiligen Zeile eine momentane Geschwindigkeit der Helligkeitssensor-Pixel relativ zur Szene, und gegebenenfalls eine Winkelgeschwindigkeit, ableitet und an ihrem Ausgang zur Verfügung hält, dass alle Geschwindigkeitsbildungseinheiten an einen gemeinsamen Geschwindigkeitsspeicher angeschlossen sind, wobei jede der Geschwindigkeitsbildungseinheiten nach Bestimmung einer Geschwindigkeit den Geschwindigkeitsspeicher überschreibt, und dass eine Bogenlängenbildungseinheit vorgesehen ist, welche dem Geschwindigkeitsspeicher nachgeschaltet ist und welche die an ihrem Eingang anliegende Geschwindigkeit integriert oder akkumuliert, insbesondere gemäß der Formel

$$l = \int_{o}^{t} v(t')dt'.$$

Hierdurch kann eine Kalibrierung der Relativgeschwindigkeit des Sensors bzw. des Spiegels unterbleiben, da ein Zusammenhang zwischen Zeit und Bogenlänge direkt aus den aufgezeichneten Daten abgeleitet werden kann.

Erfindungsgemäß kann ferner vorgesehen sein, dass ausschließlich diejenigen Helligkeitssensor-Pixel, welche einer vorgegebenen Spalte angehören, an die Punkterzeugungseinheit angeschlossen sind. Hierdurch wird das Problem der mehrfachen Detektion von Nachrichten durch in ein und derselben Reihe liegende Helligkeitssensor-Pixel vermieden.

Insbesondere ist vorteilhaft, dass dem Helligkeitssensor eine die Szene auf die Helligkeitssensor-Pixel abbildende Abbildungseinheit vorgeschaltet ist, wobei entweder der Helligkeitssensor oder die Abbildungseinheit um eine vorgegebene Achse mit vorgegebener Winkelgeschwindigkeit rotierbar oder verschwenkbar gelagert ist. Dies ermöglicht einen besonders einfachen Aufbau der zur Verfahrensführung benötigten Einheiten.

Es kann vorgesehen sein, dass der Helligkeitssensor gegenüber der Szene lagefest festgelegt ist und die Bewegung des Aufnahmebereichs des Helligkeitssensors durch die gegenüber dem Helligkeitssensor und der Szene rotierende oder schwenkende Abbildungseinheit festgelegt ist. Hierdurch wird bei stillstehendem Sensor bzw. stillstehender Kamera ein Spiegel rotiert und die aufzunehmende Szene durch Verschwenken des Spiegels auf dem Sensor abgebildet. Hierdurch wird das Problem der Datenübertragung von einem bewegten Sensor vermieden.

Vorteilhafterweise ist vorgesehen, dass die Rotationsachse oder Schwenkachse und die durch eine der Spalten von Helligkeitssensor-Pixeln auf dem Helligkeitssensor gebildete Achse zueinander parallel sind. Hierdurch werden geometrisch bedingte Mehrfachdetektionen wirkungsvoll vermieden.

Weiters kann vorteilhafterweise vorgesehen sein, dass eine Triggereinheit vorgesehen ist, welche an die Bogenlängenbestimmungseinheit oder einen Zeitgeber angeschlossen ist und welche bei Vorliegen einer vorgegebenen Bogenlänge am Ausgang der Bogenlängenbestimmungseinheit oder nach Verstreichen einer vorgegebenen Zeitspanne am Ausgang des Zeitgebers ein Triggersignal abgibt, wobei bei Vorliegen eines Signals am Ausgang der Triggereinheit der Zeitgeber oder die Bogenlängenbestimmungseinheit zurückgesetzt wird.

Hierdurch kann eine Kalibrierung der Relativgeschwindigkeit des Sensors bzw. des Spiegels unterbleiben, da ein Zusammenhang zwischen Zeit und Bogenlänge direkt aus den aufgezeichneten Daten abgeleitet werden kann.

Weiters kann vorgesehen sein, dass die Relativgeschwindigkeit zwischen dem Aufnahmebereich und der Szene, insbesondere die Winkelgeschwindigkeit, über einen vorgegebenen Zeitraum konstant gehalten ist. Mit einer solchen Anordnung wird eine besonders verzerrungsarme Aufnahme der Szene ermöglicht.

Vorteilhafterweise werden das erfindungsgemäße Verfahren sowie dessen Weiterbildungen automatisiert durchgeführt und Programme zur Durchführung dieser Verfahren auf Datenträgern gespeichert.

Fig. 1 zeigt schematisch einen grundlegenden Aufbau einer erfindungsgemäßen Anordnung.

Die Fig. 2a, 2b und 2c zeigen schematisch verschiedene Ausführungsformen von erfindungsgemäßen Helligkeitssensoren.

Die Fig. 3a, 3b und 3c zeigen schematisch Zeitverläufe von Helligkeit, Geschwindigkeit und Bogenlänge.

Fig. 4 zeigt schematisch die Weiterverarbeitung der den Helligkeitssensorpixel entnommenen Datenwerte bzw. die Ermittlung der Drehgeschwindigkeit auf Grundlage der von den Helligkeitssensor-Pixel aufgezeichneten Helligkeitswerte.

Fig. 5 zeigt schematisch eine Vorrichtung zur Aufzeichnung und Abspeicherung eines Bildes mit angeschlossenem Bildspeicher.

Fig. 6 zeigt ein erfindungsgemäß aufgenommenes Panoramabild.

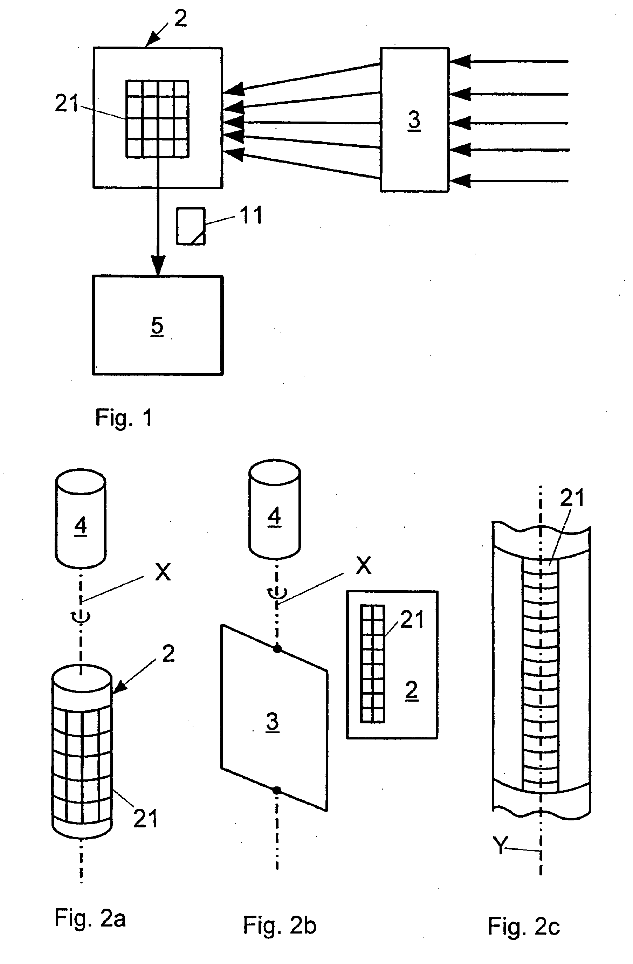

Fig. 1 zeigt schematisch den Aufbau einer erfindungsgemäßen Anordnung zur Aufnahme von weitwinkeligen Bildern von Szenen, insbesondere 360° Bildern, mit einem Helligkeitssensor 2, umfassend eine Vielzahl von Helligkeitssensor-Pixeln 21. Diesem Helligkeitssensor 2 ist eine Abbildungseinheit 3 vorgeschaltet, welche das von der Szene einfallende Licht auf die Helligkeitssensor-Pixel 21 des Helligkeitssensors 2 abbildet. Die einzelnen Helligkeitssensor-Pixel 21 sind hierbei derart ausgestaltet, dass bei jeder vom Helligkeitssensor-Pixel 21 detektierten Überschreitung oder Unterschreitung eines vorgegebenen Helligkeitsschwellenwerts durch das detektierte Licht eine Nachricht in Form eines Signals vom jeweiligen Helligkeitssensor-Pixel 21 abgegeben wird. Dabei können vorteilhafterweise ein oberer und ein unterer Helligkeitsschwellenwert vorgegeben werden, wobei bei Überschreitung des oberen Helligkeitsschwellenwerts und bei der Unterschreitung des unteren Helligkeitsschwellenwertes eine Nachricht 11 in Form eines Signals abgegeben wird.

Eine derartige Nachricht 11 umfasst Information über die Koordinate oder Koordinaten des Helligkeitssensor-Pixels 21, den Zeitpunkt der Feststellung des Überschreitens bzw. des Unterschreitens des vorgegebenen oberen bzw. unteren Helligkeitsschwellenwertes, sowie die Information darüber, ob eine Überschreitung des vorgegebenen oberen Helligkeitsschwellenwertes oder eine Unterschreitung des vorgegebenen unteren Helligkeitsschwellenwertes erfolgt ist.

Die Helligkeitssensor-Pixel 21 des Helligkeitssensors 2 sind in Form eines Feldes angeordnet und umfassen in der Regel eine Vielzahl von Reihen und Spalten. Vom Prinzip her ist zur Durchführung des erfindungsgemäßen Verfahrens aber lediglich eine Spalte von Helligkeitssensor-Pixeln 21 erforderlich. Zum Ausgleich von fertigungsbedingten, mechanischen Unregelmäßigkeiten der Bewegung des Helligkeitssensors 2 und/oder der Abbildungseinheit 3 ist es jedoch vorteilhaft, zumindest eine zweite Spalte von Helligkeitssensor-Pixeln 21 vorzusehen, insbesondere um Unregelmäßigkeiten der Bewegung nachträglich rechnerisch korrigieren zu können. Mechanische Unregelmäßigkeiten entstehen beispielsweise durch unregelmäßige Drehzahlen des den Helligkeitssensor 2 bzw. des die Abbildungseinheit 3 antreibenden Motors.

Der Helligkeitssensor 2 weist durch die spezielle Ausformung, insbesondere seiner Aufnahmeoptik und/oder Anordnung seiner Helligkeitssensor-Pixel 21 und gegebenenfalls Ausbildung seiner Abbildungseinheit 3, einen Aufnahmebereich auf, welcher einen Teilbereich der Szene erfasst. Dieser Aufnahmebereich kann, wie in den Fig. 2a bis 2c dargestellt, auf unterschiedliche Art und Weise gegenüber der Szene rotiert bzw. periodisch verschwenkt werden. Das Licht von jeweils denselben aufgenommen bzw. abzubildenden Bereichen der Szene wird dabei in zeitlich periodischen Abständen auf jeweils die selben Helligkeitssensor-Pixel 21 abgebildet.

Nachdem die Nachrichten der einzelnen Helligkeitssensor-Pixel 21 aufgenommen worden sind, kann ein Panoramabild folgendermaßen erstellt werden:

Zunächst wird aus jeder Nachricht 11 jeweils ein Bildpunkt ermittelt, indem die Zeilennummer des die jeweilige Nachricht 11 erstellenden Helligkeitssensor-Pixels 21 und der Zeitpunkt der Verarbeitung oder des Generierens der jeweiligen Nachricht als Koordinaten des der Nachricht 11 zugeordneten Bildpunktes im zu erstellenden Panoramabild festgelegt werden. Alternativ kann vorgesehen werden, dass anstelle des Zeitpunktes des Generierens der jeweiligen Nachricht 11 ein von diesem Zeitpunkt abgeleiteter Parameter, beispielsweise eine Bogenlänge oder eine Integralfunktion, zur numerischen Elimination von Unregelmäßigkeiten der Bewegung des Helligkeitssensors 2 oder der Abbildungseinheit 3 als zweite Koordinate des der Nachricht 11 zugeordneten Bildpunktes festgelegt wird. Ein Gesamtbild der Szene wird basierend auf den einlangenden Nachrichten 11 erstellt, indem die aus den Nachrichten 11 ermittelten Bildpunkte aufgrund der ihnen zugeordneten Koordinaten in ein, insbesondere leeres, Bild eingefügt werden, wobei sich die aus den Nachrichten ermittelten Bildpunkte gegenüber dem Hintergrund des Gesamtbildes, vorzugsweise farblich, abheben oder unterscheiden.

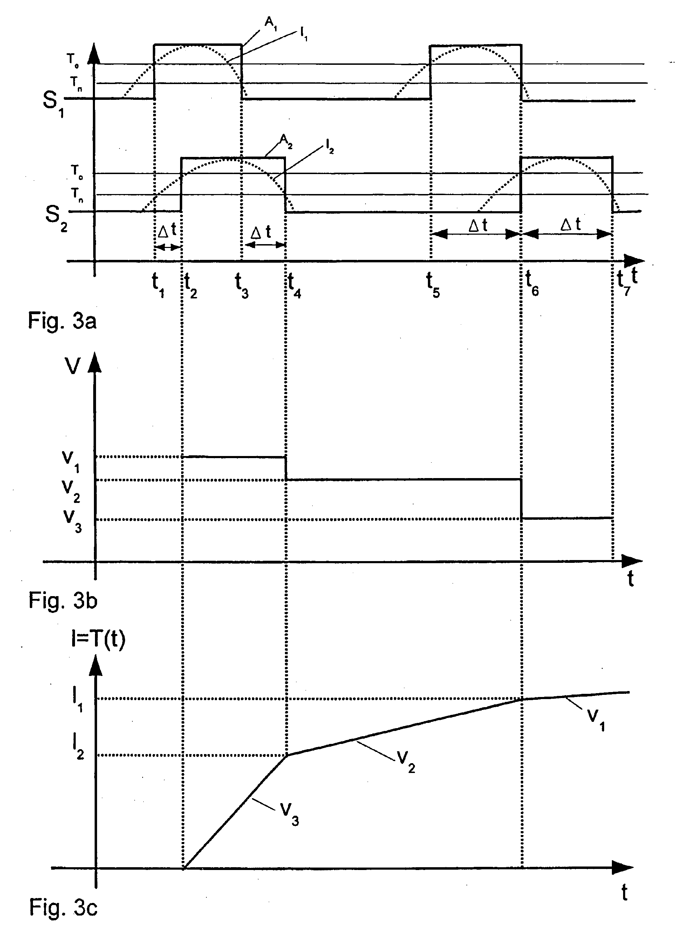

Eine bevorzugte Ausführungsform des erfindungsgemäßen Verfahrens nach Anspruch 2 wird durch die Fig. 3a bis 3c näher erläutert. Hierbei ist vorgesehen, dass der Helligkeitssensor 2 zumindest zwei Spalten von Helligkeitssensor-Pixeln 21 auf einem Träger 22 umfasst. Im Zuge des periodischen Verschwenkens oder Rotierens des Helligkeitssensors 2 werden jeweils Szenenbereiche des Aufnahmebereiches auf diejenigen Helligkeitssensors-Pixel 21 abgebildet, welche in derselben Zeile und in benachbarten Spalten des Helligkeitssensors 2 angeordnet sind.

In Fig. 3a sind schematisch Ausgangswerte $A_1$ zweier Helligkeitssensor-Pixel 21 dargestellt. Die beiden Helligkeitssensor-Pixel 21 sind in derselben Zeile und in benachbarten Spalten angeordnet. Eine festgestellte Überscheitung eines vorgegebenen oberen Helligkeitsschwellenwertes $T_o$ des detektierten Lichtes durch einen Helligkeitssensor-Pixel 21 wird durch eine ansteigende Flanke im Graphen des Verlaufs des Ausgangssignals des jeweiligen Pixels dargestellt. Auf dieselbe Weise wird das Unterschreiten des vorgegebenen unteren Helligkeitsschwellenwertes $T_u$ des detektierten Lichtes durch eine fallende Flanke dargestellt. So ergibt beispielsweise im Zeitpunkt $t_1$ eine Nachricht, welche das Überschreiten eines vorgegebenen oberen Helligkeitsschwellenwerts anzeigt, eine steigende Flanke im Graphen des Helligkeitssensor-Pixels $S_1$. Analog dazu ergibt das Überschreiten eines vorgegebenen oberen Helligkeitsschwellenwerts des detektierten Lichts zum Zeitpunkt $t_2$, sowie eine darauf generierte Nachricht 11 eine steigende Flanke im Graphen des Helligkeitssensor-Pixels $S_2$.

Treten Nachrichten von zwei benachbart gelegenen Helligkeitssensor-Pixel 21 auf, wobei diese Helligkeitssensor-Pixel 21 in derselben Reihe und in benachbarten Spalten liegen, wird angenommen, dass die Nachrichten von jeweils demselben Ereignis herrühren. Aufgrund des zeitlichen Unterschieds des Generierens der beiden Nachrichten durch die beiden Helligkeitssensor-Pixel $S_1$, $S_2$ kann unmittelbar auf die Bewegungsgeschwindigkeit des jeweiligen Helligkeitssensor-Pixels 21 gegenüber der Szene geschlossen werden. Im Falle einer Ausführungsform wie in Fig. 2b dargestellt, gemäß der sowohl die Helligkeitssensoren als auch die Szene still stehen, kann der Zeitabstand $\Delta t$ zur Bestimmung der Winkelgeschwindigkeit der Abbildungseinheit 3 herangezogen werden. Soferne aufgrund einer unregelmäßigen Bewegung des Helligkeitssensors 2 und/oder der Abbildungseinheit 3 Bildverzerrungen auftreten, können diese durch die folgende Vorgangsweise unterdrückt werden:

Tritt im Verlauf der Drehung der beiden Helligkeitssensor-Pixel $S_1$ und $S_2$ gegenüber der Szene, eine Verlangsamung der Bewegung ein, wird der Zeitabstand zwischen den zu den Zeitpunkten $t_3$ und $t_4$ erhaltenen fallenden Flanken gegenüber dem Zeitabstand zwischen den in den Zeitpunkten $t_1$ und $t_2$ erhaltenen steigenden Flanken vergrößert. Dies bedeutet, dass sich durch mechanische Schwankungen die Geschwindigkeit bzw. Drehgeschwindigkeit v verringert und ohne entsprechende Korrektur das durch die erfindungsgemäße Anordnung aufgenommene Bild in Drehrichtung gestaucht erscheinen würde. Zwischen den steigenden Flanken zu den Zeitpunkten $t_5$ und $t_6$ bzw. $t_6$ und $t_7$ ist die Geschwindigkeit des Helligkeitssensors 2 aufgrund des weiter gestiegenen Zeitabstands zwischen den jeweils korrespondierenden Flanken abermals verringert. In Fig. 3b ist der zeitliche Verlauf der Geschwindigkeit v des Helligkeitssensors 2 gegenüber der Szene graphisch dargestellt. Im Falle einer Ausführungsform mit einem gegenüber der Szene unbewegten Helligkeitssensor 2 und mit bewegter Abbildungseinheit 3 tritt im Falle einer Verzögerung oder Verringerung der Geschwindigkeit der Abbildungseinheit 3 ein vergleichbarer Fall ein. Ziel dieser Weiterbildung des Verfahrens ist es, Stauchungen, welche aufgrund der verzögerten Bewegung der Abbildungseinheit 3 bzw. des Helligkeitssensors 2 hervorgerufen sind, rechnerisch zu eliminieren bzw. zu korrigieren. Zu diesem Zweck wird erfindungsgemäß ein Parameter 11, welcher insbesondere für die von den einzelnen Helligkeitssensoren 2 zurückgelegte Bogenlänge I steht, ermittelt. Diese Bogenlänge I ist aufgrund des Gleichbleibens der Rotationsrichtung monoton ansteigend und wird von einem vorgegebenen Zeitnullpunkt an gemessen. Insbesondere kann diese Bogenlänge I durch eine Funktion T(t) dargestellt werden, welche durch Akkumulation oder Integration der Geschwindigkeit über die Zeit t ermittelt wird. Dies kann insbesondere gemäß dem Zusammenhang

$$T(t) = I = \int_0^t v(t')dt'$$

ermittelt werden.

Bei dem in Fig. 3c dargestellten Verlauf der Bogenlänge I wird der Zeitpunkt $t_2$ als Zeit-Nullpunkt angenommen. Den Zeitpunkten $t_4$ und $t_6$ ist jeweils eine Bogenlänge $I_2$ und $I_1$ zugeordnet. Fig. 3c ist ferner zu entnehmen, dass aufgrund der verringerten Geschwindigkeit der Anstieg des Parameters T(t) bzw. der Bogenlänge I mit fortschreitender Zeit t immer weniger stark zunimmt.

Ein weiterer Aspekt der Erfindung ist, dass die bei einer Vielzahl von Sensorspalten auftretende Mehrfachdetektion von Pixeln mit einem Verfahren mit den Merkmalen des Anspruchs 4 verhindert wird. Hierbei ist vorgesehen, dass einer der zeitlich beabstandeten, hintereinander einlangenden Nachrichten 11, insbesondere der letzten dieser Nachrichten 11, diejenige zuvor ermittelte Bogenlänge I zugeordnet wird, welche dem Zeitpunkt des Einlangens dieser Nachricht 11 zugeordnet ist. Alle übrigen Nachrichten, welche von Helligkeitssensor-Pixeln 21 anderer Spalten generiert worden sind, bleiben in diesem Fall zur Bildung von Bildpunkten außer Betracht. Dies bedeutet, dass ausschließlich Nachrichten 11, denen bereits eine Bogenlänge I zugeordnet worden ist, als Bildpunkte in das Bild eingetragen werden, wobei die Bogenlänge I und die Zeilennummer der jeweiligen Nachricht 11 als Bildkoordinaten eines in das zu erstellende Bild einzutragenden Punktes festgelegt werden. Da bei einer Relativbewegung des Aufnahmebereichs der Kamera 2 gegenüber der Szene die einzelnen, in derselben Reihe befindlichen Helligkeitssensor-Pixel 21 bei Detektion einer Helligkeitsschwankung hintereinander in der Reihenfolge der Detektion der Helligkeitsschwankung durch die Helligkeitssensor-Pixel 21 jeweils eine Nachricht 11 abgeben, welche von ein und derselben Helligkeitsschwankung der Szene herrührt, scheint es sinnvoll, ausschließlich eine einzige Nachricht 11 zur Bildung eines Bildpunktes heranzuziehen, da widrigenfalls jeder Hell-Dunkel-Übergang der Szene zu einer Vielzahl von eng aneinander liegenden Bildpunkten mit derselben Zeilennummer-Koordinate und unterschiedlichen Bogenlängen-Koordinaten führen würde.

Eine bevorzugte Ausführungsform des erfindungsgemäßen Verfahrens gemäß Anspruch 5 wird in Fig. 2a näher erläutert. Hierbei ist vorgesehen, dass der Helligkeitssensor 2 um eine vorgegebene Rotationsachse oder Schwenkachse X mit vorgegebener Winkelgeschwindigkeit ω rotiert wird, wobei sich der Aufnahmebereich des Helligkeitssensors 2 zeitlich periodisch bewegt. Anspruch 5 und Anspruch 14 sind auf eine Ausführungsform gemäß Fig. 2b gerichtet, bei der der Helligkeitssensor 2 gegenüber der Szene lagefest festgelegt ist und die Bewegung des Aufnahmebereichs des Helligkeitssensors 2 durch die gegenüber dem Helligkeitssensor 2 und einer Szene 1 rotierende oder schwenkende Abbildungseinheit 3 festgelegt wird. Auch in diesem Fall wird der Aufnahmebereich des Helligkeitssensors 2 zeitlich periodisch über die Szene hinweg geführt oder bewegt. Hierbei kann die Abbildungseinheit 3, wie in Figur 2b dargestellt, als Spiegel ausgeführt sein, welcher mittels eines Motors 4 gegenüber der Rotationsachse rotiert oder verschwenkt wird. Ein besonderer Vorteil dieser Ausführungsform liegt darin, dass die elektrischen Bauteile des Helligkeitssensors 2 keiner Rotationsbewegung unterliegen und somit eine aufwendige Signalübertragung von rotierten elektrischen Bauelementen auf feststehende elektrische Bauelemente nicht erforderlich ist.

In Fig. 2c wird eine weitere Ausführungsform des erfindungsgemäßen Verfahrens bzw. der erfindungsgemäßen Anordnung dargestellt, wobei vorteilhafterweise festgelegt wird, dass die Rotations- oder Schwenkachse X und die durch eine der Spalten der Helligkeitssensor-Pixel 21 auf dem Helligkeitssensor 2 gebildete Achse Y zueinander parallel verlaufen. Dies verbessert die Aufzeichnung und vermeidet eine mehrfache Detektion von Pixel, welche von derselben Helligkeitsänderung innerhalb der Szene herrühren.

Zur Kalibrierung des erfindungsgemäßen Verfahrens sowie der erfindungsgemäßen Anordnung kann vorgesehen werden, dass eine maximale Szenenänderungsrate bestimmt wird, welche anhand der Nachrichten ermittelt wird, welche innerhalb einer vorgegebenen Zeitspanne bei stillstehendem Aufnahmebereich des Helligkeitssensors 2 gegenüber der Szene ermittelt worden sind. Alternativ dazu kann für die Szenenänderungsrate ein Schätzwert vorgegeben werden oder es können Erfahrungswerte aus ähnlichen Szenen hierfür herangezogen werden.

Weiters wird die durch die periodische Bewegung erzielte Frequenz des Aufnahmebereichs des Helligkeitssensors 2 solange erhöht, bis die für eine unverändert bleibende Szene ermittelte Nachrichtenrate $R_2$ einem Vielfachen, insbesondere dem 10- bis 1000-fachen, der maximalen Szenenänderungsrate $R_1$ entspricht. Hierdurch wird erreicht, dass Gesamtbilder wesentlich schneller aufgezeichnet werden als Szenenbewegungen auftreten. Damit wird die Bildung von Bewegungsartefakten vermieden und es wird die Aufnahme scharfer Bilder ermöglicht.

Mit dem erfindungsgemäßen Verfahren kann ein Bild erzeugt werden, welches als Koordinaten die zurückgelegte Bogenlänge I sowie die Zeilenkoordinate des die jeweilige Helligkeitsschwankung detektierenden Helligkeitssensor-Pixels 21 aufweist. Um aus diesem Gesamtbild einzelne Panoramabilder ermitteln zu können, ist vorgesehen, dass nach dem Zurücklegen einer vorgegebenen Bogenlänge I oder einer Zeitspanne bezüglich des festgelegten Zeit-Nullpunkts die Aufnahme eines neuen Bildes gestartet und die Aufnahme des bisherigen Bildes beendet wird. Typischerweise entspricht die vorgegebene Bogenlänge derjenigen Bogenlänge I, welche von der Kamera oder der Abbildungseinheit 3 im Verlauf einer zeitlichen Periode zurückgelegt wird. Somit wird erreicht, dass jedes der Bilder denselben örtlichen Ursprung bezogen auf die Szene aufweist, was die Bilder untereinander vergleichbar macht und auch die Aufnahme bewegter Bilder ermöglicht. Nach Erreichen der vorgegebenen Bogenlänge wird diese auf einen vorgegebenen Wert, insbesondere Null, zurückgesetzt. Alternativ wird nach Erreichen einer vorgegebenen Zeitspanne der Zeit-Nullpunkt auf den Zeitpunkt des Beginns der Aufnahme des neuen Bilds für die Zeitkoordinate dieses neuen Bildes neu festgesetzt. Zur Erstellung bewegter Bilder kann vorgesehen werden, dass jedes der so aufgezeichneten Bilder bzw. bei sehr hohen Bildraten jedes zweite bis jedes hunderste der aufgezeichneten Bilder abgespeichert und zur Verfügung gehalten wird.

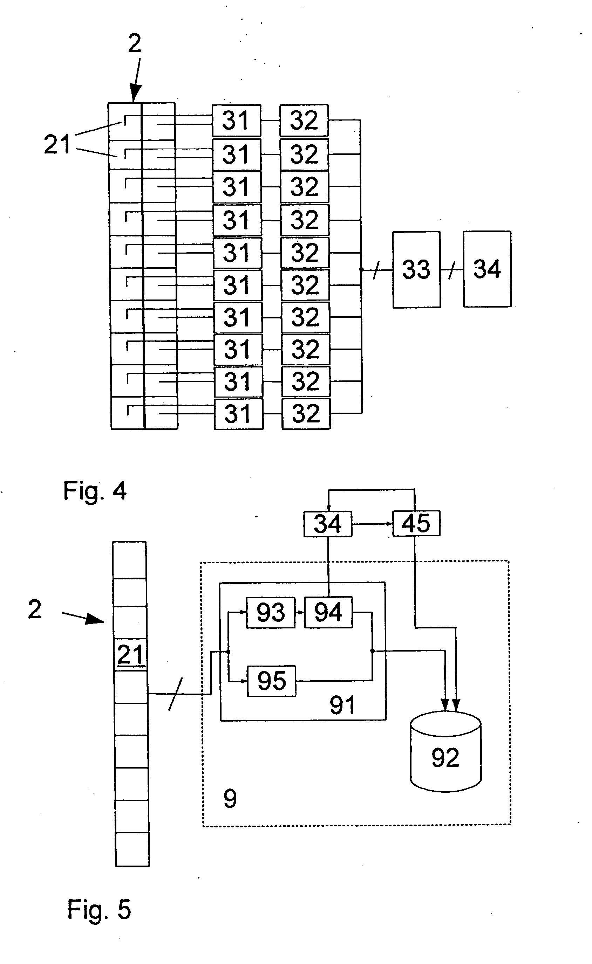

Fig. 5 zeigt schematisch eine erfindungsgemäße Anordnung zur Aufnahme von weitwinkeligen Bildern von Szenen. Die Anordnung umfasst einen Helligkeitssensor 2 mit einer Vielzahl von Helligkeitssensor-Pixeln 21. Jedes der Helligkeitssensor-Pixel 21 gibt bei von ihm festgestellter Überschreitung oder Unterschreitung eines vorgegebenen oberen oder unteren Helligkeitsschwellenwerts eine Nachricht in Form eines Signals ab. Der Kamera bzw. Bilderzeugungseinheit, umfassend die Helligkeitssensor-Pixel 21, ist eine Bilderzeugungseinheit 9 nachgeschaltet, welche eine Punkterzeugungseinheit 91 und einen Bildspeicher 92 umfasst. Die Ausgänge der Helligkeitssensor-Pixel 21 sind hierbei zu einem gemeinsamen Ausgang zusammengefasst und der Eingang der Punkterzeugungseinheit 91 ist direkt dem gemeinsamen Ausgang der Helligkeitssensor-Pixel 21 nachgeschaltet. Die Punkterzeugungseinheit 91 umfasst eine Zeiterfassungseinheit 93, welche die in den Nachrichten 11 enthaltene Generierungszeit feststellt oder der Nachricht einen durch einen externen Zeitgeber erstellten entsprechenden Zeitwert zuordnet. Ferner umfasst die Punkterzeugungseinheit 91 eine Zeilenerfassungseinheit 95, welche direkt an den Eingang der Punkterzeugungseinheit 91 angeschlossen ist, an deren Eingang die generierten Nachrichten 11 anliegen. Die Zeilenerfassungseinheit 95 erfasst die Zeilennummern der jeweiligen Nachrichten und leitet diese an ihren Ausgang weiter. Der am Ausgang der Zeiterfassungseinheit 93 anliegende Zeitwert wird einer der Zeiterfassungseinheit 93 nachgeschalteten Parameterbildungseinheit 94 geführt, wobei die Parameterbildungseinheit 94 dem Zeitwert mittels einer vorgegebenen Funktion T (siehe unten) einen Parameter zuweist. Der Ausgang der Zeilenerfassungseinheit 95 und der Ausgang der Parameterbildungseinheit 94 sind zum Ausgang der Punkterzeugungseinheit 91 geführt bzw. an diesem angeschlossen. Die Zeilennummer und der Parameter werden als Koordinaten des Bildpunktes einem der Punkterzeugungseinheit 91 nachgeschalteten Bildspeicher 92 zugeführt.

Alternativ kann vorgesehen werden, dass der Ausgang der Zeiterfassungseinheit 93 anstelle des Ausgangs der Zeiterfassungseinheit 93 direkt dem Ausgang der Punkterzeugungseinheit 91 zugeführt und die Zeilennummer und die Zeit als Koordinaten eines Bildpunktes dem Bildspeicher 92 zugeführt sind.

Zur Bestimmung der Funktion T kann, wie bereits erwähnt, der folgende Zusammenhang herangezogen werden:

$$T(t) = \quad l = \int_0^t v(t')dt'.$$

Eine Ermittlung des Parameters T(t) kann erfolgen, indem zumindest 2 Spalten von Helligkeitssensor-Pixeln 21 auf dem Träger 22 der Kamera 2 in Form eines Pixel-Arrays vorgesehen sind. Jeder Zeile von Helligkeitssensor-Pixeln 21 ist je eine Zeitabstandsmesseinheit 31 nachgeschaltet, welche den zeitlichen Abstand des Erzeugens oder Generierens von Nachrichten 11 der in der jeweiligen Zeile liegenden Helligkeitssensor-Pixel 21 ermittelt. Jeder Zeitabstandmesseinheit 31 ist jeweils eine Geschwindigkeitsbildungseinheit 32 nachgeschaltet, welche aus dem zeitlichen Abstand Δt und einem vorgegebenen oder gemessenen räumlichen Abstand von benachbarten Helligkeitssensor-Pixeln 21 der jeweiligen Zeile eine momentane Geschwindigkeit der Helligkeitssensor-Pixel 21 relativ zur Szene ermittelt. Hieraus kann gegebenenfalls eine Winkelgeschwindigkeit w einer Anordnung, wie in Fig. 2a dargestellt, ermittelt werden. Allen Geschwindigkeitsbildungseinheiten 32 sind an einen gemeinsamen Geschwindigkeitsspeicher 33 angeschlossen. Jede der Geschwindigkeitsbildungseinheiten 32 überschreibt nach Bestimmung einer Geschwindigkeit den Geschwindigkeitsspeicher 33, wodurch im Geschwindigkeitsspeicher 33 die jeweils aktuellste ermittelte Geschwindigkeit vorliegt.

Dem Geschwindigkeitsspeicher 33 ist eine Bogenlängenbildungseinheit 34 nachgeschaltet, wobei die am Eingang der Bogenlängenbildungseinheit 34 anliegende Geschwindigkeit integriert oder akkumuliert wird. Dies kann insbesondere mit der oben genannten Integrationsformel bewerkstelligt werden. Der Ausgang der Bogenlängenbildungseinheit 34 ist an die Parameterbildungseinheit 94 angeschlossen und liefert an diese die Funktion T(t) zur Bestimmung des Parameters, insbesondere der Bogenlänge l.

Um die mehrfache Erzeugung von Nachrichten beruhend auf den selben Helligkeitsschwankungen in der Szene zu vermeiden, kann vorgesehen werden, dass die Nachrichten lediglich einer Spalte von Helligkeitssensor-Pixel 21, wie in Fig. 5 dargestellt, an die Bilderzeugungseinheit 9 weitergeleitet werden.

Ferner kann vorgesehen werden, dass eine Triggereinheit 45 der Bogenlängenbestimmungseinheit 34 zugeordnet ist. Bei Vorliegen einer vorgegebenen Bogenlänge l am Ausgang der Bogenlängenbestimmungseinheit 34 gibt die Triggereinheit 45 ein Triggersignal ab, wodurch die Bogenlängenbestimmungseinheit 34 zurückgesetzt wird.

Auf ähnliche Weise kann an Stelle der Bogenlängenbestimmungseinheit 34 ein Zeitgeber vorgesehen werden, welcher nach Ablauf einer vorgegebenen Zeitspanne die Triggereinheit 45 zur Abgabe eines Triggersignals veranlasst. Die Triggereinheit 45 setzt den Zeitgeber zurück, woraufhin dieser erneut zu zählen beginnt.

Ferner kann vorgesehen werden, dass die Triggereinheit 45 direkt mit dem Bildspeicher 92 gekoppelt ist und der Bildspeicher 92 bei Abgabe eines Triggersignals die einlangenden Bildpunkte einem neuen Bild zuordnet.

Eine bevorzugte Ausführungsform sieht vor, dass zur Vermeidung von Beschleunigungsartefakten und Bildverzerrungen die Winkelgeschwindigkeit (w) bzw. die Geschwindigkeit v, nämlich die Relativgeschwindigkeit zwischen dem Aufnahmebereich und der Szene über einen vorgegebenen Zeitraum weitestgehend konstant gehalten ist.

Als Resultat liefert das erfindungsgemäße Verfahren ein Kantenbild, in dem Kanten im Bereich von Hell-Dunkel-Übergängen des Abbildes der Szene angeordnet sind. Es fällt daher eine geringere Datenmenge an, wodurch eine automatisierte Weiterverarbeitung wesentlich erleichtert wird.

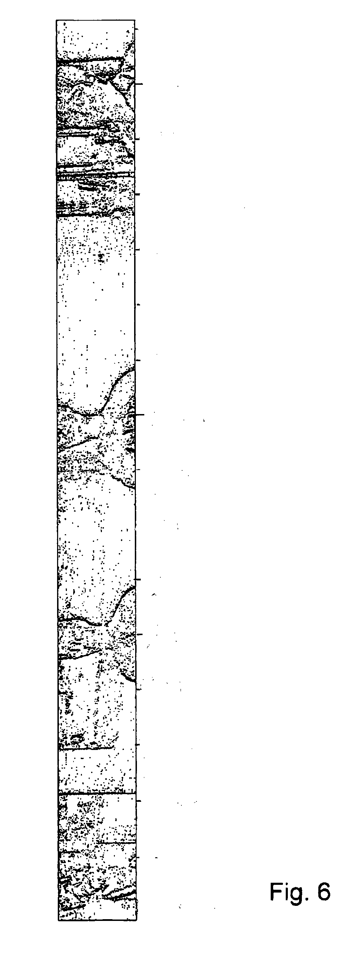

Fig. 6 zeigt ein erfindungsgemäß aufgenommenes Panoramabild, wobei aus Platzgründen zwei Teilbereiche des Bildes untereinander dargestellt sind. Die horizontale Achse stellt den Drehwinkel bzw. die zurückgelegte Bogenlänge l dar. Die vertikale Achse entspricht der Zeilennummer des jeweiligen, das Bild aufzeichnenden Helligkeitssensor-Pixel 21. Helle Punkte stellen detektierte Helligkeitsänderungen von Dunkel zu Hell dar, dunkle Punkte stellen detektierte Helligkeitsänderungen von Hell zu Dunkel dar.

**Patentansprüche**

1. Verfahren zur Aufnahme von Bildern, insbesondere weitwinkeligen Bildern oder 360° Panoramabildern, mit einem Helligkeitssensor (2) mit einer Vielzahl von in zumindest einer Spalte angeordneten Helligkeitssensor-Pixeln (21),
wobei jedes der Helligkeitssensor-Pixel (21) sowohl bei von ihm festgestellter Überschreitung eines vorgegebenen oberen als auch bei von ihm festgestellter Unterschreitung dieses vorgegebenen unteren Helligkeitsschwellenwerts des von ihm detektierten Lichts eine Nachricht (11) in Form eines Signals abgibt, **dadurch gekennzeichnet,**

a) **dass** der Aufnahmebereich des Helligkeitssensors (2) gegenüber der aufzunehmenden Szene rotiert oder periodisch verschwenkt wird, wodurch das Licht von jeweils denselben abzubildenden Bereichen der Szene in zeitlich periodischen Abständen auf jeweils dieselben Helligkeitssensor-Pixel (21) trifft bzw. abgebildet wird,
b) **dass** aus den Nachrichten (11) Bildpunkte eines Gesamtbildes der Szene ermittelt werden, indem die Zeilennummer des eine jeweiligen Nachricht (11) erstellenden Helligkeitssensor-Pixels (21) und der Zeitpunkt des Generierens der jeweiligen Nachricht (11) festgestellt werden und die Zeilennummer des eine Nachricht (11) erstellenden Helligkeitssensor-Pixels (21) und der Zeitpunkt des Generierens der jeweiligen Nachricht (11) oder ein von diesem Zeitpunkt abgeleiteter Parameter als Koordinaten des der Nachricht (11) zugeordneten Bildpunktes heranaezogen werden, und
c) **dass** ein Gesamtbild der Szene basierend auf den einlangenden Nachrichten (11) sowie den diesen Nachrichten (11) zugeordneten Bildpunkten erstellt wird, indem diese Bildpunkte gegenüber dem Hintergrund des Gesamtbildes, insbesondere sich farblich abhebend, sich unterscheidend dargestellt werden.

2. Verfahren nach Anspruch 1, **dadurch gekennzeichnet,**

a) **dass** zumindest zwei Spalten von Helligkeitssensor-Pixeln (21) auf dem Träger (22) in Form eines Pixel-Arrays angeordnet werden,
b) **dass** gleiche Szenenbereiche im Zuge des periodischen Verschwenkens oder des Rotierens des Aufnahmebereichs des Helligkeitssensors (2) auf diejenigen Helligkeitssensor-Pixel (21) abgebildet werden, welche in derselben Zeile und in benachbarten Spalten angeordnet sind,
c) **dass** der zeitliche Abstand ($\Delta t$) zwischen dem Generieren von Nachrichten (11), welche von zwei in derselben Zeile und in benachbarten Spalten angeordneten Helligkeitssensor-Pixeln (21) abgegeben werden, ermittelt wird,
d) **dass** aus dem zeitlichen Abstand ($\Delta t$) und dem räumlichen Abstand der Helligkeitssensor-Pixel (21) einer Zeile eine momentane Geschwindigkeit (v) bzw. Drehgeschwindigkeit, der Helligkeitssensor-Pixel (21) relativ zur Szene und gegebenenfalls eine darauf basierende Winkelgeschwindigkeit ($\omega$), abgeleitet wird,
e) **dass** jedem Zeitpunkt (t) bezüglich eines vorgegebenen Zeit-Nullpunkts durch eine Funktion (T) eine, insbesondere monoton ansteigende, zurückgelegte Bogenlänge (I) durch Akkumulation oder Integration der Geschwindigkeit über die Zeit (t) zugeordnet wird, wobei insbesondere die Geschwindigkeit (v) für jede auftretende Auf-einanderfolge von zeitlich beabstandeten, hin-tereinander einlangenden Nachrichten neu er-mittelt wird, insbesondere nach dem Zusam-menhang

$$l = \int_{o}^{t} v(t')dt'.$$

3. Verfahren nach Anspruch 2, **dadurch gekennzeichnet, dass** die Reihenfolge der Erzeugung der Nachrichten (11) mit der Reihenfolge der Anordnung der die jeweiligen Nachrichten (11) abgebenden Helligkeitssensor-Pixel (21) in Bezug auf die Bewe-gungsrichtung des Gegenstandsbereichs des Hel-ligkeitssensors (2) gegenüber der Szene übereinstimmt.

4. Verfahren gemäß Anspruch 2 oder 3, **dadurch gekennzeichnet,**

a) **dass** einer der zeitlich beabstandeten, hin-tereinander einlangenden Nachrichten (11), ins-besondere der letzten dieser Nachrichten (11), diejenige Bogenlänge (I) zugeordnet wird, welche dem Zeitpunkt des Einlangens dieser Nachricht (11) zugeordnet worden ist, und
b) **dass** ausschließlich Nachrichten (11), denen bereits eine Bogenlänge (I) zugeordnet worden ist, als Bildpunkte in das Bild eingetragen werden, wobei die Bogenlänge (I) als gennanter Parameter und die Zeilennummer der jeweiligen Nachricht (11) als Bildkoordinaten des einzutragenden Punktes festgelegt werden.

**5.** Verfahren nach einem der vorangehenden Ansprüche, **dadurch gekennzeichnet, dass** der Helligkeitssensor (2) oder eine dem Helligkeitssensor (2) vorgeschaltete Abbildungseinheit (3) um eine vorgegebenen Rotationsachse oder Schwenkachse (X) mit vorgegebener Winkelgeschwindigkeit (ω) rotiert oder verschwenkt wird, wobei die Bewegung des Aufnahmebereichs des Helligkeitssensors (2) durch die gegenüber dem Helligkeitssensor (2) und der Szene (1) rotierende oder verschwenkte Abbildungseinheit (3) festgelegt wird.

**6.** Verfahren nach einem der vorangehenden Ansprüche, **dadurch gekennzeichnet, dass** die Rotationsachse oder Schwenkachse (X) und die durch eine der Spalten von Helligkeitssensor-Pixel (21) auf dem Helligkeitssensor (2) gebildete Achse (Y) zueinander parallel ausgerichtet werden.

**7.** Verfahren nach einem der vorangehenden Ansprüche, **dadurch gekennzeichnet,**

     a) **dass** eine maximale Szenenänderungsrate ($R_1$) in Form der Anzahl von Nachrichten (11) innerhalb einer vorgegebenen Zeitspanne bei stillstehendem Aufnahmebereich des Helligkeitssensors (2) gegenüber der Szene ermittelt oder ein Wert hierfür vorgegeben wird, und
     b) **dass** die Frequenz der periodischen Bewegung des Aufnahmebereichs des Helligkeitssensors (2) so lange erhöht wird, bis die für eine unverändert bleibende Szene (1) ermittelte Nachrichtenrate ($R_2$) einem Vielfachen, insbesondere dem 10-fachen bis 1000-fachen, der maximalen Szenenänderungsrate ($R_1$) entspricht.

**8.** Verfahren nach einem der vorangehenden Ansprüche, **dadurch gekennzeichnet, dass** nach dem Zurücklegen einer vorgegebenen Bogenlänge (I) oder nach Ablauf einer Zeitspanne bezüglich eines festgelegten Zeit-Nullpunkts die Aufnahme eines neuen Bildes gestartet wird und die Aufnahme des bisherigen Bildes beendet wird, wobei gegebenenfalls die Bogenlänge (I) auf einen vorgegebenen Wert, insbesondere 0, zurückgesetzt wird, oder der Zeitpunkt des Beginns der Aufnahme des neuen Bildes als Zeitnullpunkt für die Zeitkoordinate dieses neuen Bildes festgesetzt wird, wobei vorzugsweise das bisherige Bild abgespeichert und/oder zur Verfügung gehalten wird.

**9.** Anordnung zur Aufnahme von, insbesondere weitwinkeligen, Bildern einer Szene, insbesondere 360° Bildern, mit einem Helligkeitssensor (2) mit einer Vielzahl von Helligkeitssensor-Pixeln (21), wobei jedes der Helligkeitssensor-Pixel (21) bei von ihm festgestellter Überschreitung eines vorgegebenen oberen Helligkeitsschwellenwerts sowie bei Unterschreitung eines vorgegebenen unteren Helligkeitsschwellenwerts des von ihm detektierten Licht eine Nachricht (11) in Form eines Signals abgibt, und wobei die Helligkeitssensor-Pixel (21) in zumindest einer Spalte angeordnet sind, **dadurch gekennzeichnet,**

     a) **dass** die Anordnung eine Antriebseinheit (4) umfasst, welche den Aufnahmebereich des Helligkeitssensors (2) gegenüber der Szene rotiert oder periodisch verschwenkt,
     b) **dass** die Anordnung eine Bilderzeugungseinheit (9) umfasst, welche eine Punkterzeugungseinheit (91) und einen Bildspeicher (92) umfasst,
     c) **dass** die Punkterzeugungseinheit (91) den Helligkeitssensor-Pixeln (21) nachgeschaltet ist,
     d) **dass** die Punkterzeugungseinheit (91) eine Zeiterfassunaseinheit (93) umfasst, welche die in den Nachrichten enthaltene Generierungszeit feststellt oder der Nachricht einen durch einen externen Zeitgeber erstellten entsprechenden Zeitwert zuordnet,
     e) **dass** die Punkterzeugungseinheit (91) eine Zeilenerfassungseinheit (95) umfasst, welche die dem die Nachricht generierenden Helligkeitssensor-Pixel (21) zugeordnete Zeilennummer detektiert und diese an den Ausgang der Zeilenerfassungseinheit (95) anlegt,
     f) **dass** der am Ausgang der Zeiterfassungseinheit (93) anliegende Zeitwert, optional einer der Zeiterfassungseinheit (93) nachgeschalteten Parameterbildungseinheit (94) zugeführt ist, welche von dem Zeitwert mittels einer vorgegebenen Funktion (T) einen Parameter ableitet, und
     g) **dass** der Ausgang der Zeilenerfassungseinheit (95) und der Ausgang der Zeiterfassungseinheit (93) oder der Parameterbildungseinheit (94) an den Ausgang der Punkterzeugungseinheit (91) angeschlossen sind und die Zeilennummer und die Zeit oder der Parameter als Koordinaten eines Bildpunktes dem Bildspeicher (92) zugeführt sind.

**10.** Anordnung nach Anspruch 9, **dadurch gekennzeichnet,**

     a) **dass** zumindest zwei Spalten von Helligkeitssensor-Pixeln (21) in Form eines Pixel-Arrays angeordnet sind,
     b) **dass** je einer Zeile von Hetiigkeitssensor-Pixeln (21) eine Zeitabstandsmesseinheit (31) nachgeschaltet ist, welche den zeitlichen Abstand (Δt) des Erzeugens von Nachrichten (11), welche von in der jeweiligen Zeile liegenden Helligkeitssensor-Pixeln (21) abgegeben worden sind, ermittelt,

c) **dass** jeder Zeitabstandsmesseinheit (31) jeweils eine Geschwindigkeitsbildungseinheit (32) nachgeschaltet ist, welche aus dem zeitlichen Abstand (Δt) und dem vorgegebenen räumlichen Abstand der Helligkeitssensor-Pixel (21) der jeweiligen Zeile eine momentane Geschwindigkeit (v) der Helligkeitssensor-Pixel (21) relativ zur Szene, und gegebenenfalls eine Winkelgeschwindigkeit (w), ableitet und an ihrem Ausgang zur Verfügung hält,

d) **dass** alle Geschwindigkeitsbildungseinheiten (32) an einen gemeinsamen Geschwindigkeitsspeicher (33) angeschlossen sind, wobei jede der Geschwindigkeitsbildungseinheiten (32) nach Bestimmung einer Geschwindigkeit den Geschwindigkeitsspeicher (33) überschreibt, und

e) **dass** eine Bogenlängenbildungseinheit (34) vorgesehen ist, welche dem Geschwindigkeitsspeicher (33) nachgeschaltet ist und welche die an ihrem Eingang anliegende Geschwindigkeit (v) integriert oder akkumuliert, insbesondere gemäß der Formel

$$l = \int_{0}^{t} v(t')dt'.$$

11. Anordnung gemäß Anspruch 10, **dadurch gekennzeichnet, dass**

ausschließlich diejenigen Helligkeitssensor-Pixel (21), welche einer vorgegebenen Spalte angehören, an die Punkterzeugungseinheit (91) angeschlossen sind und/oder dass dem Helligkeitssensor (2) eine die Szene auf die Helligkeitssensor-Pixel (21) abbildende Abbildungseinheit (3) vorgeschaltet ist, wobei entweder der Helligkeitssensor (2) oder die Abbildungseinheit um eine vorgegebene Achse (X) mit vorgegebener Winkelgeschwindigkeit (ω) rotierbar oder verschwenkbar gelagert ist und/oder dass der Helligkeitssensor (2) gegenüber der Szene lagefest festgelegt ist und die Bewegung des Aufnahmebereichs des Helligkeitssensors (2) durch die gegenüber dem Helligkeitssensor (2) und der Szene (1) rotierende oder schwenkende Abbildungseinheit (3) festgelegt ist.

12. Anordnung gemäß Anspruch 10 oder 11, **dadurch gekennzeichnet, dass** die Rotationsachse oder Schwenkachse (X) und die durch eine der Spalten von Helligkeitssensor-Pixeln (21) auf dem Helligkeitssensor (2) gebildete Achse (Y) zueinander parallel sind.

13. Anordnung nach einem der Ansprüche 11 oder 12, **dadurch gekennzeichnet, dass** eine Triggereinheit (45) vorgesehen ist, welche an die Bogenlängenbestimmungseinheit (34) oder einen Zeitgeber angeschlossen ist und welche bei Vorliegen einer vorgegebenen Bogenlänge am Ausgang der Bogenlängenbestimmungseinheit (34) oder nach Verstreichen einer vorgegebenen Zeitspanne am Ausgang des Zeitgebers ein Triggersignal abgibt, wobei bei Vorliegen eines Signals am Ausgang der Triggereinheit (45) der Zeitgeber oder die Bogenlängenbestimmungseinheit (34) zurückgesetzt wird.

14. Anordnung nach einem der Ansprüche 11 bis 13, **dadurch gekennzeichnet, dass** die Relativgeschwindigkeit zwischen dem Aufnahmebereich und der Szene, insbesondere die Winkelgeschwindigkeit (ω), über einen vorgegebenen Zeitraum konstant gehalten ist.

**Claims**

1. A method for taking pictures, in particular wide-angled pictures or 360º panorama pictures with a brightness sensor (2) with a multitude of brightness sensor pixels (21) arranged in at least one column, wherein each of the brightness sensor pixels (21) emits a message (11) in the form of a signal both in the case of exceedance detected by it of a preset upper as well as in the case of a shortfall detected by it of this preset lower brightness threshold of the light detected by it, **characterized in**

a) **that** the captured area of the brightness sensor (2) is rotated or periodically pivoted in relation to the scene to be captured, whereby the light of each of the same areas of the scene to be pictured in each case encounter s or is pictured on the same brightness sensor pixel (21) at periodic time intervals,

b) **that** picture points of an overall picture of the scene are detected from the messages (11), while the line number of the brightness sensor pixel (21) generating a respective message (11) and the time of the generation of the respective message (11) are established

and the line number of the brightness sensor pixel (21) generating a message (11) and the time of the generation of the respective message (11) or a parameter derived from this time are consulted as coordinates of the picture point assigned to the message (11), and

c) **that** the overall picture of the scene is generated based on the arriving messages (11) as well as the picture points assigned to these messages (11), while these picture points are depicted differently in relation to the background of the overall picture, in particular standing out in color.

2. A method according to claim 1, **characterized in**

a) **that** at least two columns of brightness sensor pixels (21) are arranged on the carrier (22) in the form of a pixel array,

b) **that** the same scene areas are pictured on those brightness sensor pixels (21) in the course of the periodic pivoting or of the rotation of the captured area of the brightness sensor (2), which are arranged in the same lines and in adjacent columns,

c) **that** the time interval ($\Delta$t) between the generation of messages (11), which are emitted by two brightness sensor pixels (21) arranged in the same line and in adjacent columns, is detected,

d) **that** a current velocity (v) or rotation speed, the brightness sensor pixel (21) relative to the scene and if applicable an angle velocity ($\omega$) based thereon, is derived from the time interval ($\Delta$t) and the spatial interval of the brightness sensor pixel (21) of a line,

e) **that** a, particularly monotonically increasing, covered arc length (I) is assigned to each time (t) with regard to a preset time-zero point by a function (T) through accumulation or integration of the velocity over the time (t), wherein in particular the velocity (v) is determined again for each sequence which occurs of temporally spaced messages arriving one after the other, in particular according to the relationship

$$1 = \int_{0}^{t} v(t')dt'.$$

3. A method according to claim 2, **characterized in that** the sequence of the generation of messages (11) agrees with the sequence of the arrangement of the brightness sensor pixel (21) emitting the respective messages (11) with regard to the direction of movement of the object area of the brightness sensor (2) in relation to the scene.

4. A method according to claim 2 or 3 **characterized in**

a) **that** one of the temporally spaced messages (11) arriving one after the other, is assigned to that arc length (I), which had been assigned to the time of the arrival of this message (11), and

b) **that** exclusively messages (11), to which an arc length (I) has already been assigned, are entered as picture points into the picture, wherein the arc length (I) is defined as mentioned parameter and the line number of the respective message (11) as picture coordinates of the points to be entered.

5. A method according to one of the preceding claims, **characterized in that** the brightness sensor (2) or a picture unit (3) upstream of the brightness sensor (2) is rotated or pivoted about a preset rotational axis or pivot axis (X) with preset angular velocity ($\omega$), wherein the movement of the captured area of the brightness sensor (2) is established by the picture unit (3) rotating or pivoted in relation to the brightness sensor (2) and the scene (1).

6. A method according to one of the preceding claims, **characterized in that** the rotational axis or pivot axis (X) and the axis (Y) formed by one of the columns of brightness sensor pixel (21) on the brightness sensor (2) are aligned parallel to each other.

7. A method according to one of the preceding claims, **characterized in**

a) **that** a maximum scene change rate ($R_1$) in the form of the number of messages (11) is determined within a preset time span in a stationary captured area of the brightness sensor (2) in relation to the scene and a value is preset for this, and

b) **that** the frequency of the periodic movement of the captured area of the brightness sensor (2) is increased until the message rate ($R_2$) determined for a scene remaining unchanged (1) corresponds to a multiple, in particular the 10-fold to 1000-fold, of the maximum scene change rate($R_1$).

8. A method according to one of the preceding claims, **characterized in that** after covering a preset arc length (1) or after expiration of a time span with regard to an specified time-zero point the taking of a new picture is started and the taking of the previous picture is ended, wherein, if appropriate, the arc length (I) is restored to a preset value, in particular 0, or the time of the beginning of the taking of the new picture is set as the time-zero point for the time coordinate of this new picture, wherein preferably the previous picture is stored and/or kept available.

9. An arrangement for taking, particularly wide-angled, pictures of a scene, in particular 360º pictures, with a brightness sensor (2) with a multitude of brightness sensor pixels (21),

wherein each of the brightness sensor pixels (21) emits a message (11) in the form of a signal in the case of an exceedance detected by it of a preset upper brightness threshold as well as in the case of a shortfall of a preset lower brightness threshold of the light detected by it, and

wherein the brightness sensor pixel s (21) are arranged in at least one column, **characterized in**

a) **that** the arrangement comprises a drive unit (4), which rotates or periodically pivots the captured area of the brightness sensor (2) in relation to the scene,

b) **that** the arrangement comprises a picture generation unit (9), which comprises a point generation unit (91) and a picture memory (92),

c) **that** the point generation unit (91) is downstream from the brightness sensor pixels (21),

d) **that** the point generation unit (91) comprises a time recording unit (93), which sets the generation time contained in the messages or assigns to the message a corresponding time value created by an external timer,

e) **that** the point generation unit (91) comprises a line recording unit (95), which detects the line number assigned to the brightness sensor pixel (21) generating the message and attaches this to the outlet of the line recording unit (95),

f) **that** the time value attached to the outlet of the time recording unit (93) is optionally fed to a parameter formation unit (94) downstream from the time recording unit (93), which derives a parameter from the time value by means of a preset function (T), and

g) **that** the outlet of the line recording unit (95) and the outlet of the time recording unit (93) or the parameter formation unit (94) are connected to the outlet of the point generation unit (91) and the line number and the time or the parameter are fed as coordinates of the picture point to the picture memory (92).

10. An arrangement according to claim 9, **characterized in**

a) **that** at least two columns of brightness sensor pixels (21) are arranged in the form of a pixel array,

b) **that** a time interval measuring unit (31), which determines the time interval ($\Delta t$) of the generation of messages (11), which have been emitted from brightness sensor pixels (21) lying in the respective line, is downstream to each line of brightness sensor pixels (21),

c) **that** each time interval measuring unit (31) is downstream in each case to a velocity formation unit (32), which derives a current velocity (v) of the brightness sensor pixel (21) relative to the scene, and if applicable an angular velocity ($\omega$) from the time interval ($\Delta t$) and the preset spatial interval of the brightness sensor pixel (21) of the respective line and keeps it available at its outlet,

d) **that** all velocity formation units (32) are connected to a common velocity memory (33), wherein each of the velocity formation units (32) overwrites the velocity memory (33) after determining a velocity, and

e) **that** an arc length formation unit (34) is provided, which is downstream from the velocity memory (33) and which integrates or accumulates the velocity (v) attached to its inlet, in particular according to the formula

$$1 = \int_{0}^{t} v(t')dt'.$$

11. An arrangement according to claim 10, **characterized in that** exclusively those brightness sensor pixels (21) which belong to a preset column, are connected to the point generation unit (91) and/or that a picture unit (3) picturing the scene on the brightness sensor pixels (21) is upstream from the brightness sensor (2), wherein either the brightness sensor (2) or the picture unit can be rotated about a preset axis (X) with preset angular velocity ($\omega$) or is pivotally mounted and/or that the brightness sensor (2) is set in a fixed position in relation to the scene and the movement of the captured area of the brightness sensor (2) is set by the picture unit (3) rotating or pivoting in relation to the brightness sensor (2) and the scene (1).

12. An arrangement according to claim 10 or 11, **characterized in that** the rotational axis or pivot axis (X) and the axis (Y) formed by one of the columns of the brightness sensor pixels (21) on the brightness sensor (2) are parallel to each other.

13. An arrangement according to one of claims 11 or 12, **characterized in that** the trigger unit (45) is provided, which is connected to the arc length determination unit (34) or to a timer and which emits a trigger signal in the presence of a preset arc length at the outlet of the arc length determination unit (34) or after the passing of a preset time span at the outlet of the timer, wherein in the presence of a signal at the outlet of the trigger unit (45) the timer or the arc length determination unit (34) is reset.

14. An arrangement according to one of claims 11 to 13, **characterized in that** the relative velocity between the captured area and the scene, in particular, the angular velocity ($\omega$) is kept constant over a preset time period.

## Revendications

**1.** Procédé pour la prise de vues, en particulier des photos grand-angle ou photos panoramiques à 360°, comportant un capteur de luminosité (2) muni d'une pluralité de pixels (21) disposés en au moins une colonne,

chaque pixel (21) du capteur de luminosité délivrant une information (11) sous la forme d'un signal lorsqu'il constate que la lumière qu'il détecte est supérieure à une valeur seuil de luminosité supérieure donnée et lorsqu'il constate que celle-ci est inférieure à une valeur seuil de luminosité inférieure donnée, **caractérisé**

a) **en ce que** la zone de balayage du capteur de luminosité (2) est amenée à pivoter périodiquement ou à tourner par rapport à la scène à photographier, moyennant quoi la lumière des mêmes zones de la scène à photographier dans chaque cas atteint ou est représentée à des intervalles de temps périodiques sur les mêmes pixels (21) respectifs du capteur de luminosité,

b) **en ce qu'**à partir des informations (11) sont déterminés des points d'image d'un cliché global de la scène, du fait que le numéro de ligne du pixel (21) du capteur de luminosité générant une information (11) respective et l'instant de la génération de l'information (11) respective sont constatés,

et le numéro de ligne du pixel (21) du capteur de luminosité générant une information (11) et l'instant de la génération de l'information (11) respective ou un paramètre dérivé de cet instant sont pris en compte comme les coordonnées du point d'image associé à l'information (11), et

c) **en ce qu'**un cliché global de la scène est généré sur la base des informations (11) entrant, ainsi que des points d'image associés à ces informations (11), du fait que lesdits points d'image sont représentés différemment par rapport à l'arrière-plan du cliché global, en particulier se démarquent par leur couleur.

**2.** Procédé selon la revendication 1, **caractérisé**

a) **en ce qu'**au moins deux colonnes de pixels (21) du capteur de luminosité sont disposées sur le support (22) sous la forme d'un ensemble de pixels,

b) **en ce que**, au cours du pivotement périodique ou de la rotation de la zone de balayage du capteur de luminosité (2), des mêmes zones de la scène sont représentées sur les pixels (21) du capteur de luminosité qui sont disposés dans la même ligne et dans des colonnes adjacentes,

c) **en ce qu'**est déterminé l'intervalle de temps (Δt) entre la génération des informations (11) qui sont délivrées par deux pixels (21) du capteur de luminosité disposés sur la même ligne et dans des colonnes adjacentes,

d) **en ce qu'**une vitesse (v) ou vitesse de rotation actuelles des pixels (21) du capteur de luminosité par rapport à la scène et, le cas échéant, une vitesse angulaire (ω) sont dérivées à partir de l'intervalle de temps (Δt) et de la distance physique entre les pixels (21) du capteur de luminosité d'une ligne,

e) **en ce qu'**à chaque instant (t) par rapport à un instant zéro donné est associée une longueur d'arc (1) parcourue, en particulier à pente ascendante monotone, par une fonction (T) au moyen d'une accumulation ou intégration de la vitesse en fonction du temps (t), en particulier la vitesse (v) étant nouvellement déterminée pour chaque suite générée d'informations espacées dans le temps, parvenant successivement, en particulier selon la relation

$$ l = \int_0^t v(t')dt' $$

**3.** Procédé selon la revendication 2, **caractérisé en ce que** l'ordre de génération des informations (11) concorde avec l'ordre d'agencement des pixels (21) du capteur de luminosité délivrant les informations (11) respectives par rapport à la direction de déplacement de la zone d'objet du capteur de luminosité (2) par rapport à la scène.

**4.** Procédé selon la revendication 2 ou 3, **caractérisé**

a) **en ce qu'**à l'une des informations (11) espacées dans le temps entrant successivement, en particulier les dernières de ces informations (11), est associée la longueur d'arc (1) qui est associée à l'instant de l'entrée de cette information (11), et

b) **en ce qu'**exclusivement les informations (11), auxquelles a déjà été affectée une longueur d'arc (1), sont insérées dans le cliché sous forme de points d'image, la longueur d'arc (1) étant définie comme ledit paramètre, et les numéros de ligne de chaque information (11) étant définis comme les coordonnées d'image du point à enregistrer.

**5.** Procédé selon l'une quelconque des revendications précédentes, **caractérisé en ce que** le capteur de luminosité (2) ou une unité de reproduction (3) montée en amont du capteur de luminosité (2) est amené à tourner ou pivoter autour d'un axe de rotation ou axe de pivotement (X) donné avec une vitesse angulaire (ω) donnée, le déplacement de la zone de balayage du capteur de luminosité (2) étant défini par l'unité de reproduction (3) tournant ou pivotant par rapport au capteur de luminosité (2) et à la scène (1).

6. Procédé selon l'une quelconque des revendications précédentes, **caractérisé en ce que** l'axe de rotation ou axe de pivotement (X) et l'axe (Y), formé sur le capteur de luminosité (2) par l'une des colonnes de pixels (21) du capteur de luminosité, sont disposés parallèlement l'un à l'autre.

7. Procédé selon l'une quelconque des revendications précédentes, **caractérisé**

   a) **en ce qu'**un taux de variation maximal ($R_1$) de la scène est déterminé sous la forme du nombre d'informations (11) à l'intérieur d'un intervalle de temps donné lorsque la zone de balayage du capteur de luminosité (2) est immobile par rapport à la scène ou une valeur est prédéfinie pour celle-ci, et
   b) **en ce que** la fréquence du déplacement périodique de la zone de balayage du capteur de luminosité (2) est augmentée jusqu'à ce que le taux d'informations ($R_2$) déterminé pour une scène (1) restant inchangée corresponde à un multiple, en particulier 10 à 1000 fois, du taux de variation maximal ($R_1$) de la scène.

8. Procédé selon l'une quelconque des revendications précédentes, **caractérisé en ce que** la prise de vue d'un nouveau cliché commence et la prise de vue du cliché actuel se termine lorsqu'une longueur d'arc (1) donnée a été parcourue ou après l'expiration d'un intervalle de temps par rapport à un instant zéro défini, la longueur d'arc (1) étant ramenée, le cas échéant, à une valeur donnée, en particulier zéro, ou l'instant du début de prise de vue du nouveau cliché étant défini comme un instant zéro pour les coordonnées de temps de ce nouveau cliché, le cliché actuel étant, de préférence, stocké en mémoire et/ou maintenu à disposition.

9. Système pour prendre des clichés, en particulier à grand-angle, d'une scène, en particulier des clichés à 360°, comportant un capteur de luminosité (2) muni d'une pluralité de pixels (21), chaque pixel (21) du capteur de luminosité délivrant une information (11) sous la forme d'un signal lorsqu'il constate que la lumière qu'il détecte est supérieure à une valeur seuil de luminosité supérieure donnée et lorsqu'il constate que celle-ci est inférieure à une valeur seuil de luminosité inférieure donnée, et les pixels (21) du capteur de luminosité étant disposés en au moins une colonne, **caractérisé**

   a) **en ce que** le système comporte une unité d'entraînement (4), qui fait pivoter périodiquement ou fait tourner la zone de balayage du capteur de luminosité (2) par rapport à la scène,
   b) **en ce que** le système comporte une unité de production de clichés (9), qui comporte une unité de production de points (91) et une mémoire pour clichés (92),
   c) **en ce que** l'unité de production de points (91) est montée en aval des pixels (21) du capteur de luminosité,
   d) **en ce que** l'unité de production de points (91) comporte une unité de détection du temps (93) qui constate le temps de génération contenu dans les informations ou associe à l'information une valeur de temps correspondante générée par une horloge externe,
   e) **en ce que** l'unité de production de points (91) comporte une unité de détection des lignes (95), qui détecte le numéro de ligne affecté au pixel (21) du capteur de luminosité générant l'information et applique celui-ci à la sortie de l'unité de détection des lignes (95),
   f) **en ce que** la valeur de temps, appliquée à la sortie de l'unité de détection du temps (93) est acheminée, en option, à une unité de formation des paramètres (94), qui est montée en aval de l'unité de détection du temps (93) et qui, au moyen d'une fonction (T) donnée, dérive un paramètre à partir de la valeur de temps, et
   g) **en ce que** la sortie de l'unité de détection des lignes (95) et la sortie de l'unité de détection du temps (93) ou de l'unité de formation des paramètres (94) sont raccordées à la sortie de l'unité de production de points (91), et le numéro de ligne et le temps ou le paramètre sont acheminés vers la mémoire pour clichés (92) sous forme de coordonnées d'un point d'image.

10. Système selon la revendication 9, **caractérisé**

   a) **en ce qu'**au moins deux colonnes de pixels (21) du capteur de luminosité sont disposées sous la forme d'un ensemble de pixels,
   b) **en ce qu'**en aval de chaque ligne de pixels (21) du capteur de luminosité est montée une unité de mesure des intervalles de temps (31) qui détermine l'intervalle de temps ($\Delta t$) entre la génération des informations (11) qui ont été délivrées par des pixels (21) du capteur de luminosité situés dans la ligne concernée,
   c) **en ce qu'**en aval de chaque unité de mesure des intervalles de temps (31) est montée une unité de formation de la vitesse (32) qui, à partir de l'intervalle de temps ($\Delta t$) et de la distance physique donnée entre les pixels (21) du capteur de luminosité de la ligne concernée, dérive une vitesse (v) actuelle des pixels (21) du capteur de luminosité par rapport à la scène, et, le cas échéant, une vitesse angulaire (ω), et les tient à disposition au niveau de sa sortie,

d) **en ce que** toutes les unités de formation de la vitesse (32) sont raccordées à une mémoire de vitesse (33) commune, chacune des unités de formation de la vitesse (32) écrasant la mémoire de vitesse (33) à la suite de la détermination d'une vitesse, et

e) **en ce qu'**il est prévu une unité de formation de la longueur d'arc (34) qui est montée en aval de la mémoire de vitesse (33) et qui intègre ou accumule la vitesse (v) appliquée à son entrée, en particulier selon la formule

$$l = \int_{0}^{t} v(t')dt'.$$

**11.** Système selon la revendication 10, **caractérisé en ce qu'**exclusivement les pixels (21) du capteur de luminosité qui appartiennent à une colonne donnée, sont raccordés à une unité de production de points (91) et/ou **en ce qu'**une unité de reproduction (3), reproduisant la scène sur les pixels (21) du capteur de luminosité, est montée en amont du capteur de luminosité (2), le capteur de luminosité (2) ou l'unité de reproduction étant montés de manière à pouvoir tourner ou pivoter autour d'un axe (X) donné avec une vitesse angulaire (ω) donnée, et/ou **en ce que** le capteur de luminosité (2) est fixé immobile par rapport à la scène et le déplacement de la zone de balayage du capteur de luminosité (2) étant défini par l'unité de reproduction (3) tournant ou pivotant par rapport au capteur de luminosité (2) et à la scène (1).

**12.** Système selon la revendication 10 ou 11, **caractérisé en ce que** l'axe de rotation ou l'axe de pivotement (X) et l'axe (Y), formé par l'une des colonnes de pixels (21) du capteur de luminosité sur le capteur de luminosité (2) sont parallèles l'un à l'autre.

**13.** Système selon la revendication 11 ou 12, **caractérisé en ce qu'**il est prévu une unité de déclenchement (45) qui est raccordée à l'unité de détermination de la longueur d'arc (34) ou à une horloge et qui délivre un signal de déclenchement à la sortie de l'unité de détermination de la longueur d'arc (34) en présence d'une longueur d'arc donnée ou à la sortie de l'horloge après l'écoulement d'un intervalle de temps donné, ladite horloge ou ladite unité de détermination de la longueur d'arc (34) étant remises à la valeur initiale en présence d'un signal à la sortie de l'unité de déclenchement (45).

**14.** Système selon l'une quelconque des revendications 11 à 13, **caractérisé en ce que** la vitesse relative entre la zone de balayage et la scène, en particulier la vitesse angulaire (ω), est maintenue constante pendant une période déterminée.

Fig. 1

Fig. 2a          Fig. 2b          Fig. 2c

Fig. 3a

Fig. 3b

Fig. 3c

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6757008 B
- US 2005099504 A
- US 2008117294 A
- AT 502032
- WO 2006125233 A
- WO 2008061268 A